# EUROPÄISCHE PATENTANMELDUNG

(11) **EP 1 777 388 A1**
(43) Veröffentlichungstag der Anmeldung: **25.04.2007**
(21) Anmeldenummer: 05405597.5
(22) Anmeldetag: 21.10.2005
(51) Int. Cl.: F02B 37/16

(54) **Zweitakt-Motor**

(71) Anmelder: Wärtsilä Schweiz AG, 8401 Winterthur (CH)
(72) Erfinder: Weber, Markus, 8006 Zürich (CH)
(74) Vertreter: Sulzer Management AG

(57) **Zusammenfassung**

Die Erfindung betrifft einen Zweitakt-Motor (1), insbesondere einen Zweitakt-Grossdieselmotor (1) mit Längsspülung, umfassend einen Zylinder (2) mit einem Auslassventil (3) und einem Kolben (4), der im Zylinder (2) zwischen einem oberen Totpunkt (OT) und einem unteren Totpunkt (UT) hin- und herbewegbar angeordnet ist. Weiter umfasst der erfindungsgemässe Zweitakt-Motor (1) eine Aufladegruppe (5) mit einer Turbine (51) mit Turbinenlauffrad (511), das mit einem Verdichterrad (521) eines Verdichters (52) zum Verdichten von Luft (6), die als Spülluft (61) über einen Auslass (522) des Verdichters (52) und eine Spülluftleitung (7) dem Zylinder (2) des Zweitakt-Motors (1) durch eine Spülluftöffnung (8) zuführbar ist, drehfest gekoppelt ist, wobei der Turbine (51) zum Antreiben des Turbinenlauffrads (511) über das Auslassventil (3) und eine Abgasleitung (9) Abgase (10) aus dem Zylinder (2) zuführbar sind. Erfindungsgemäss ist dabei zwischen der Spülluftleitung (7) und der Abgasleitung (9) eine Bypass-Leitung (11) vorgesehen.

## Beschreibung

Die Erfindung betrifft einen Zweitakt-Motor, insbesondere einen Zweitakt-Grossdieselmotor sowie ein Verfahren zum Betreiben eines Zweitakt-Motors gemäss dem Oberbegriff des unabhängigen Anspruchs der jeweiligen Kategorie.

Zur Leistungssteigerung von Hubkolbenbrennkraftmaschinen, wie zum Beispiel von Grossdieselmotoren für Schiffe oder stationäre Anlagen zur Erzeugung elektrischer Energie, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im wesentlichen aus einer Turbine, die durch die unter Druck in die Aufladegruppe eintretenden heissen Abgase angetrieben wird. Die Turbine treibt ihrerseits ein Laufrad an, wodurch Frischluft angesaugt und verdichtet wird. Der Turbine mit Laufrad als Verdichter, eine Anordnung, die häufig auch einfach als Turbolader bezeichnet wird, ist ein Diffusor, ein Ladeluftkühler mit Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird. Durch den Einsatz einer solchen Aufladegruppe kann somit die Frischluftzufuhr erhöht und die Effizienz des Verbrennungsvorgangs im Brennraum des Zylinders gesteigert werden.

Dabei sind Turbolader bereits seit langen bekannt und können sowohl in Zweitakt-Motoren als auch in Viertakt-Motoren erfolgreich eingesetzt werden. So wurde bereits in der CHX190624980 im Jahre 1905 erstmals ein Turbolader für einen Viertakt-Motor angegeben.

Im Fall von Grossdieselmotoren erfolgt, je nach Typ, die Einspeisung der Luft an unterschiedlichen Stellen am Zylinder. So wird beispielsweise bei längsgespülten Zweitakt-Motoren die Luft über Spülschlitze, die in der Lauffläche im unteren Bereich des Zylinders angeordnet sind, in den Brennraum des Zylinders eingebracht. Bei Viertakt-Motoren wird die Ladeluft in der Regel über ein oder mehrere Einlassventile, die im Zylinderdeckel angeordnet sind, in den Brennraum des Zylinders eingebracht. Dabei sind durchaus auch Zweitakt-Motoren bekannt, die an Stelle von Spülschlitzen im unteren Bereich des Zylinders mit Einlassventilen im Zylinderdeckel ausgerüstet sind.

Da die Turbine der Aufladegruppe allein durch die aus dem Brennraum des Zylinders entweichenden heissen Abgase angetrieben wird, arbeiten die bekannten Aufladegruppen für Grossdieselmotoren insbesondere kurz nach dem Start bzw. unterhalb einer bestimmten Grenzdrehzahl, vor allem auch im Teillastbereich der Maschine, nur wenig effektiv. Das heisst, dass zum Beispiel die in einem vorangegangenen Verbrennungsvorgang entstandenen Abgase nur in ungenügendem Masse aus dem Brennraum des Zylinders gespült werden, oder der Brennraum des Zylinders während des Spültakts nicht ausreichend mit Frischluft versorgt wird und damit für den folgenden Verbrennungstakt Frischluft nicht in ausreichender Menge zur Verfügung steht.

Daher ist es zum Beispiel aus der EP 1 380 738 A1 bekannt, die Aufladegruppe durch einen oder mehrere zusätzliche mechanische oder elektrische Hilfslader zu ergänzen, um unterhalb einer Grenzdrehzahl bzw. im Teillastbereich eine entsprechende Drehmomentsteigerung zu erreichen, so dass die Hubkolbenbrennkraftmaschine effizienter betrieben werden kann. Der Hilfslader saugt üblicherweise die Luft aus einem ersten Raum, der dem Ladeluftkühler nachgeordnet ist, an und fördert diese in einen zweiten Raum, aus dem die Luft dann über die Spülschlitze in den Brennraum des Zylinders einströmen kann. Ein Zurückströmen der Luft in den ersten Raum wird dabei meist durch als Klappen ausgebildete Rückströmsicherungen verhindert. Solche Hilfslader sind häufig als elektrische Gebläse mit jeweils bis zu 200 kW elektrischer Leistung ausgelegt und unterstützen bzw. ersetzen den Abgasturbolader unterhalb der Grenzdrehzahl, die typischerweise bei ca. 10 % bis 50 %, speziell bei 30 % bis 35 % der Vollastleistung des Grossdieselmotors erreicht wird. Ist die Grenzdrehzahl überschritten, kann in der Regel auf den Hilfslader verzichtet werden, d.h. der Hilfslader wird abgeschaltet und die Maschine wird allein durch den Abgasturbolader aufgeladen.

Wenn auch durch den Einsatz von Hilfsladern zur Unterstützung des Abgasturboladers im Niederlastbetrieb eine Verbesserung der Zylinderspülung erreichbar ist, wird der Brennraum des Zylinder bei den bekannten Zweitakt-Verfahren im Niederlastbereich unterhalb einer gewissen Grenzdrehzahl bzw. im Teillastbereich dennoch entweder nur unzureichend gespült, so dass im anschliessenden Verbrennungstakt Frischluft nicht in ausreichender Menge zur Verfügung steht, oder aber es wird bei kleinen Drehzahlen dem Brennraum eine zu grosse Menge an Frischluft zugeführt. Das heisst, die Menge an zugeführter Luft kann bei den bekannten Verfahren zum Betreiben einer Hubkolbenbrennkraftmaschine nicht gesteuert oder geregelt werden.

Darüber hinaus bringt der Einsatz zusätzlicher Hilfslader zur Unterstützung des Abgasturboladers im Niederlastbetrieb auch erhebliche Nachteile mit sich. Neben den Anschaffungskosten für die Hilfslader müssen zu deren Steuerung und / oder Regelung zusätzliche Einrichtungen installiert werden. Durch die zuvor erwähnten Klappen, die als Rückströmsicherungen während des Betriebs des Hilfsladers unerlässlich sind, ist die Gestaltung des Einlassreceivers relativ aufwendig. Zusätzliche Aggregate erfordern selbstverständlich einen zusätzlichen Wartungs- und Reparaturaufwand mit den damit verbundenen Mehrkosten für Betriebsmittel, Ersatzteile und Personal. Darüber hinaus beanspruchen die Hilfslader sowie die Unterteilung des Einlassreceivers in einen durch die Klappen getrennten ersten und zweiten Raum relativ viel Platz, der meist knapp bemessen ist und bedingen zusätzliches Gewicht. Ausserdem ist der Betrieb mit Hilfsladern auch aus energetischer Sicht ungünstig, da beispielsweise die für den Betrieb elektrischer Hilfslader notwendige elektrische Energie bereit gestellt werden muss. Das heisst, letztlich resultiert der Betrieb der Hilfslader, auch wegen des zusätzlichen Gewichts, in einem erhöhten Treibstoffverbrauch.

Es ist daher eine Aufgabe der Erfindung einen Zweitakt-Motor, insbesondere einen Zweitakt-Grossdieselmotor mit Längsspülung bereitzustellen, der auch bei kleinen Drehzahlen und insbesondere im Teillastbereich effizient und mit genügender Leistungsausbeute betreibbar ist. Ferner ist es eine Aufgabe der Erfindung, ein Verfahren zum Betreiben eines solchen Zweitakt-Motors vorzuschlagen.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit einen Zweitakt-Motor, insbesondere einen Zweitakt-Grossdieselmotor mit Längsspülung, umfassend einen Zylinder mit einem Auslassventil und einem Kolben, der im Zylinder zwischen einem oberen Totpunkt und einem unteren Totpunkt hin- und herbewegbar angeordnet ist. Weiter umfasst der erfindungsgemässe Zweitakt-Motor eine Aufladegruppe mit einer Turbine mit Turbinenlauffrad, das mit einem Verdichterrad eines Verdichters zum Verdichten von Luft, die als Spülluft über einen Auslass des Verdichters und eine Spülluftleitung dem Zylinder des Zweitakt-Motors durch eine Spülluftöffnung zuführbar ist, drehfest gekoppelt ist, wobei der Turbine zum Antreiben des Turbinenlauffrads über das Auslassventil und eine Abgasleitung Abgase aus dem Zylinder zuführbar sind. Erfindungsgemäss ist dabei zwischen der Spülluftleitung und der Abgasleitung eine Bypass-Leitung vorgesehen.

Wesentlich für die Erfindung ist es somit, dass zwischen der Spülluftleitung und der Abgasleitung eine Bypass-Leitung vorgesehen ist, so dass insbesondere im Teillastbereich Frischluft aus der Spülluftleitung am Zylinder des Zweitakt-Motors vorbei in die Abgasleistung umgeleitet wird.

Dabei ist es bei Viertakt-Motoren bereits bekannt eine Bypass-Leitung zwischen Ansaugleitung und Abgasleitung vorzusehen, um eine Leistungssteigerung im Teillastbereich zu erreichen. Wie weiter unten noch beschrieben wird, ist der Nutzen dieser Massnahme im Fall eines Viertakt-Motors dem Fachmann sofort klar, da im Ausstoss-Takt, also wenn die Verbrennungsgase nach abgeschlossener Verbrennung über das Auslassventil aus dem Zylinder gespült werden, der entsprechende Zylinder des Viertakt-Motors als Pumpe wirkt und die Verbrennungsgase in den Abgasturbolader pumpt, wobei die gepumpte Menge an Abgas im wesentlichen unabhängig davon ist, ob eine Bypass-Leitung zwischen Ansaugleitung und Abgasleitung vorgesehen ist oder nicht.

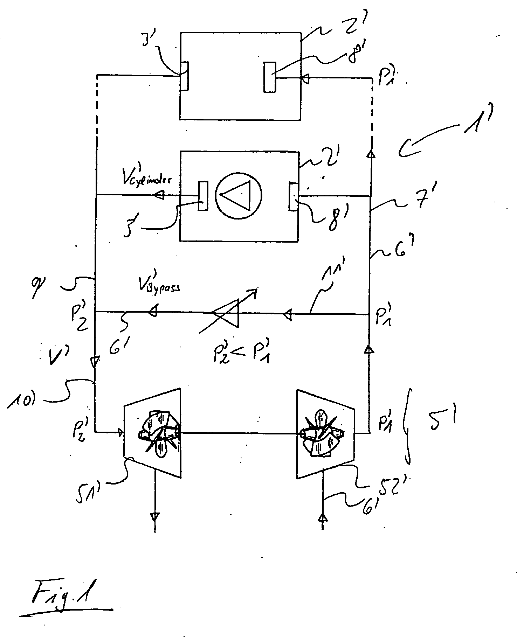

Zur Verdeutlichung der Problematik soll zunächst anhand der Fig. 1 die Wirkungsweise einer Bypass-Leitung bei einem bekannten Viertakt-Motor, wie er zum Beispiel zum Antrieb eines Kraftfahrzeuges, im Speziellen eines Lastkraftwagens aus dem Stand der Technik bereits bekannt ist, erläutert werden.

Zur Unterscheidung eines aus dem Stand der Technik bekannten Viertakt-Motors, wie er in Fig. 1 schematisch dargestellt ist und einem Zweitakt-Motor gemäss der vorliegenden Erfindung, sind die Bezugszeichen in Fig. 1, die sich auf den Stand der Technik beziehen, mit einem Hochkomma versehen, während die Bezugszeichen der Fig. 2 und Fig. 3, die sich auf einen erfindungsgemässen Zweitakt-Motor beziehen, nicht mit einem Hochkomma versehen.

In Fig. 1 ist ein schematisches Schaubild eines aus dem Stand der Technik bekannten Viertakt-Motors dargestellt, der im folgenden gesamthaft mit dem Bezugszeichen 1' bezeichnet wird.

Der Viertakt-Motor 1 ' umfasst mehrere Zylinder 2', die in bekannter Weise mit einer Aufladegruppe 5', häufig auch als "Turbolader" bezeichnet, bestehend aus einem Verdichter 52' und einer Turbine 51', derart zusammenwirken, dass die Zylinder 2' in einem Ansaugtakt über die Einlassventile 8' durch den Verdichter 52' mit Luft 6' unter einem Druck P'₁ befüllt werden, wobei der Verdichter 52' durch die Turbine 51', die von Abgas 10` über ein Auslassventil 3' aus einem anderen Zylinder 2' gespeist wird, angetrieben wird.

Dabei hängt, wie dem Fachmann hinlänglich bekannt ist, die Leistung der Turbine 51', und damit die Leistung des Verdichters 52' wesentlich von der Menge V' an Gasen 10' ab, die pro Zeiteinheit durch die Turbine 51' strömt.

Zur Unterstützung der Turbine 51', d.h. zur Erhöhung der Leistung der Aufladegruppe 5', ist zwischen der Abgasleitung 9', die die Abgase 10' aus den Zylindern 2' der Turbine 51' zuführt, und der Ansaugleitung 7', die die Frischluft aus dem Verdichter 52' über die Einlassventile 8' den Zylindern 2' zuführt, eine Bypass-Leitung 11' vorgesehen.

Die Funktionsweise dieser Anordnung kann dabei vereinfacht wie folgt beschrieben werden: Die gesamte Menge V` an Gasen 10`, die pro Zeiteinheit durch die Turbine 51' der Aufladegruppe 5' geleitet wird, setzt sich zusammen aus der Summe der Menge an Abgas V'_{Cylinder}, die bei geöffnetem Auslassventil 3' vom Zylinder 2' geliefert wird, und der Menge an Luft V'_{Bypass}, die pro Zeiteinheit über die Bypass-Leitung 11' aus der Ansaugleitung 7' vom Verdichter 52' in die Abgasleitung 9' gepresst wird. Die gesamte Menge an Luft V`, die pro Zeiteinheit durch die Turbine 51' ' geleitet wird ergibt sich somit in Summe zu: V' = V'_{Cylinder} + V'_{Bypass.}

Entscheidend ist nun, dass die Menge V'_{Cylinder} an Abgasen 10', die der Zylinder 2' pro Zeiteinheit zur Verfügung stellt, im wesentlichen nicht davon abhängt, ob eine Bypass-Leitung 11' vorgesehen ist oder nicht.

Das ist eine unmittelbare Folge des Viertakt-Prinzips. Beim Viertakt-Motor ist nämlich im Ausstoss-Takt, d.h. bei geöffnetem Auslassventil 2', das Einlassventil 8' gleichzeitig geschlossen. Im Ansaugtakt, d.h. wenn der Zylinder 2' über das geöffnete Einlassventil 8' mit Frischluft 6' befüllt wird, ist das Auslassventil 3' gleichzeitig geschlossen. Der dargstellungsgemäss obere Zylinder 2' in Fig. 1 befindet sich somit gerade in einem Ansaugtakt, während der darstellunggemäss untere Zylinder 2' sich gleichzeitig in einem Austoss-Takt befindet.

Dadurch arbeitet der betreffende Zylinder 2' im Ausstoss-Takt als Pumpe und die Gesamtmenge an Gasen 10`, die der Zylinder 2' während eines Ausstoss-Taktes unter einem Druck P'₂ in die Abgasleitung 9' pumpt, hängt in erster Linie nur vom Volumen des Zylinders 2' ab und ist damit im wesentlichen unabhängig davon, ob eine Bypass-Leitung 11' zwischen Ansaugleitung 7' und Abgasleitung 9' vorgesehen ist oder nicht.

Da jedoch der Druck P'₁, unter dem der Verdichter 52' Luft 6' in die Ansaugleitung 7' presst, höher ist als der Druck P'₂ in der Abgasleitung 9', kann über die Bypass-Leitung 11' aus der Ansaugleitung 7' zusätzlich Luft 6' in Form des Volumenstroms V'_{Bypass} in die Abgasleitung 9' fliessen, so dass der gesamte Gasfluss V' durch die Turbine 51' erhöht wird, wodurch die Leistung der Aufladegruppe 5', und damit die durch den Verdichter 52' pro Zeiteinheit in die Ansaugleitung 7' geförderte Menge an Luft 6' erhöht wird, was letztlich zu einer Leistungssteigerung des Viertakt-Motrors 1' im Betriebszustand führt.

Völlig anders verhält es sich beim Zweitakt-Motor, insbesondere bei Zweitakt-Grossdieselmotoren mit Längsspülung. Hier sind nämlich im Spültakt die Spülschlitze, die mit den Einlassventilen des Viertakt-Motors korrespondieren, und die Auslassventile zumindest zeitweise gleichzeitig geöffnet, so dass der Motor selbst wie eine "Blende" zwischen Spülluftleitung und Abgasleitung wirkt und nicht wie eine Pumpe.

Daher ist man bisher davon ausgegangen, dass sich im Fall eines Zweitakt-Motors, und im Speziellen im Falle eines Zweitakt-Grossdieselmotors mit Längsspülung, eine Bypass-Leitung nicht positiv auf die Leistung des Motors im unteren Drehzahlbereich bzw. im Teillastbereich auswirken kann, da durch die Bypass-Leitung zwischen Spülluftleitung und Abgasleitung die Druckdifferenz zwischen den Spülschlitzen, also dem Spüllufteinlass und dem Auslassventil, über das die Verbrennungsgase ausgespült werden, verringert wird.

Wie dem Fachmann wohlbekannt ist, hängt jedoch die Menge an Luft, die bei geöffneten Spülschlitzen, bzw. bei geöffnetem Einlassventil im Fall von nicht längsgespülten Zweitakt-Motoren, eben wesentlich von der Druckdifferenz zwischen Frischluft-Einlass und Abgasleitung ab, da die Spülluftschlitze und das Auslassventil gleichzeitig geöffnet sind. In diesem Betriebszustand der Maschine wirkt der entsprechende Zylinder eben nicht als Pumpe sondern als Blende, so dass der Frischluftdurchsatz bzw. die Menge an eingebrachter Frischluft wesentlich durch die Druckdifferenz über dem entsprechenden Zylinder bestimmt ist.

Folglich war es bisher klar, dass bei einem Zweitakt-Motor, insbesondere bei einem Zweitakt-Grossdieselmotor mit Längsspülung, eine Bypass-Leitung zwischen Spülluftleitung und Abgasleitung nicht zu einer Leistungssteigerung des Zweitakt-Motors führen kann, sondern ganz im Gegenteil, die Leistung des Motors vor allem im Teillastbereich durch eine Bypass-Leitung sogar noch verschlechtert wird.

Daher war es für den Fachmann bisher völlig unstrittig, dass zwischen Spülluftleitung und Abgasleitung keinesfalls eine Bypass-Leitung als Bypass über den Zylinder vorgesehen werden darf.

Überraschender Weise hat sich jedoch gezeigt, dass eine Bypass-Leitung zwischen der Spülluftleitung und der Abgasleitung auch beim Zweitakt-Motor, insbesondere auch bei einem Zweitakt-Grossdieselmotor mit Längsspülung zu einer Leistungssteigerung, speziell auch im unteren Lastbereich bzw. Drehzahlbereich und im Teillastbereich des Motors führt.

Mit ein wesentlicher Grund dafür ist, dass durch die Luft die am Zylinder vorbei durch die Bypass-Leitung in die Abgasleitung strömt, der Differenzdruck über der Turbine des Turboladers erhöht wird, so dass das Turbinenlaufrad der Turbine stärker angetrieben wird, wodurch die Leistung des Verdichters erhöht wird, so dass letztlich mehr frische Luft durch die Aufladegruppe zur Verfügung gestellt wird. Dieser Effekt kompensiert überraschenderweise bei weitem den gleichzeitig negativen Effekt, nämlich dass durch die Druckerhöhung im Abgasrohr die Druckdifferenz über dem Zylinder, also zwischen Spüllufteingang an den Spülschlitzen und dem Auslassventil abnimmt.

Das heisst, für die Funktion des erfindungsgemässen Zweitakt-Motors ist es wesentlich, dass der Differenzdruck über der Turbine der Aufladegruppe, die im wesentlichen dem Differenzdruck zwischen dem Inneren der Abgasleitung und dem äusseren Atmosphärendruck entspricht, unabhängig von der Druckdifferenz über dem zu spülenden Zylinder, also der Druckdifferenz zwischen Spüllufteinlass an den Spülluftschlitzen und dem Abgasauslass am Auslassventil zu betrachten ist.

Obwohl die Druckdifferenz über dem zu spülenden Zylinder zwischen Lufteinlass und Auslassventil abnimmt, was tendenziell zu einer Verminderung der Durchspülung des Zylinders mit Spülluft führt, steigt gleichzeitig der Differenzdruck über der Turbine der Aufladegruppe, so dass die Leistung des Turboladers erheblich, vor allem auch aber nicht nur, im Teillastbereich gesteigert wird, so dass in der Summe der negative Effekt der Verminderung der Druckdifferenz über dem Zylinder überkompensiert wird.

Ein weiterer positiver Effekt der Steigerung des Drucks im Abgasrohr besteht dabei darin, dass dadurch der Abfluss von Frischluft, die beim Spülen durch die Spülluftschlitze in den Zylinder im Spültakt eingebracht wurde, durch den höheren Druck im Abgasrohr reduziert wird. Das heisst, es verbleibt in der Summe mehr Frischluft im Zylinder, so dass im nachfolgenden Verbrennungszyklus die Verbrennung im Zylinder verbessert ist, und der Motor so ebenfalls eine entsprechende Leistungssteigerung zeigt.

In einem bevorzugten Ausführungsbeispiel eines erfindungsgemässen Zweitakt-Motors umfasst die Abgasleitung ein Abgas-Sammelrohr zur Sammlung der Abgase aus mehreren Zylindern, und die Bypass-Leitung ist zwischen der Spülluftleitung und dem Abgass-Sammelrohr vorgesehen. D.h., die Bypass-Leitung mündet direkt in das Abgas-Sammelrohr, das ein verhältnismässig grosses Volumen aufweist, so dass eine gewisse Speicherwirkung entsteht, die einen mehr oder weniger konstanten höheren Differenzdrucks über der Turbine bewirkt, so dass eine gleichmässigere Leistungssteigerung erreicht wird.

In einem anderen Beispiel kann die Bypass-Leitung auch zwischen dem Auslassventil und dem Abgas-Sammelrohr vorgesehen sein. Im Speziellen können dann an jedem Zylinder separate Bypass-Leitungen vorgesehen sein, die jeweils die Spülluft am Zylinder vorbeiführen.

In einem für die Praxis besonders wichtigen Ausführungsbeispiel umfasst die die Spülluftleitung einen Ladeluftkühler und die Bypass-Leitung ist in Bezug auf den Zylinder lufteingangsseitig zwischen dem Verdichter und dem Ladeluftkühler vorgesehen, wobei in einem weiteren Beispiel die Bypass-Leitung auch zwischen der Spülluftöffnung und dem Ladeluftkühler vorgesehen sein kann.

Bevorzugt ist in oder an der Bypass-Leitung ein steuer- und / oder regelbares Regelventil vorgesehen, so dass die Menge an Luft, die pro Zeiteinheit durch die Bypass-Leitung am Zylinder vorbeifliesst, einstellbar ist.

Dazu kann eine Ansteuereinheit vorgesehen sein, so dass das Regelventil in Abhängigkeit von einem Betriebsparameter des Zweitakt-Motors, insbesondere in Abhängigkeit von der Drehzahl und / oder der Last und oder eines anderen Betriebsparameters steuer- und / oder regelbar ist, so dass die Menge an Luft, die durch die Bypass-Leitung fliesst an jeden Betriebszustand des Zweitakt-Motors optimal anpassbar ist.

Die Erfindung betrifft weiter ein Verfahren zum Betreiben eines erfindungsgemässen Zweitakt-Motors, wie er weiter oben eingehend beschrieben wurde, wobei über die Bypass-Leitung eine vorgegebene Druckdifferenz zwischen der Spülluftleitung und der Abgasleitung eingestellt wird.

Dabei kann die Druckdifferenz in Abhängigkeit von einem Betriebsparameter des Zweitakt-Motors, insbesondere in Abhängigkeit von der Drehzahl und /oder der Last und oder eines anderen Betriebsparameters eingestellt werden.

In einem speziellen Ausführungsbeispiel eines erfindungsgemässen Verfahrens wird die Bypass-Leitung zwischen der Spülluftleitung und zwischen dem Auslassventil und dem Abgas-Sammelrohr vorgesehen und die Bypass-Leitung wird gleichzeitig zwischen der Spülluftleitung und dem Abgas-Sammelrohr vorgesehen, wobei in Abhängigkeit von einem Betriebsparameter des Zweitakt-Motors, insbesondere in Abhängigkeit von der Drehzahl und /oder der Last und oder eines anderen Betriebsparameters, eine vorgegebene Druckdifferenz zwischen der Spülluftleitung und dem Auslassventil und / oder zwischen der Spülluftleitung und dem Abgas-Sammelrohr (91) eingestellt wird.

Es versteht sich, dass die zuvor beschriebenen Ausführungsbeispiele der Erfindung nicht abschliessend zu verstehen sind, sondern dass auch weitere, hier nicht im Detail beschriebene Ausführungsbeispiele durch die Erfindung abgedeckt sind, und insbesondere alle geeigneten Kombinationen der in dieser Anmeldung beschriebenen Ausführungsbeispiele von der Erfindung erfasst sind.

Im folgenden wird die Erfindung an Hand der Zeichnung näher erläutert. Es zeigen in schematischer Darstellung:
- Fig. 1: ein bekannter Viertakt-Motor;

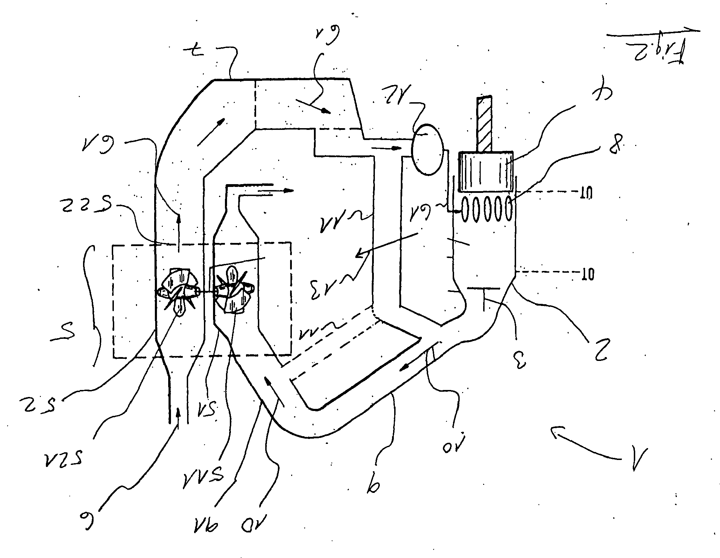

- Fig. 2: ein erfindungsgemässer Zweitakt-Motor mit Bypass-Leitung;

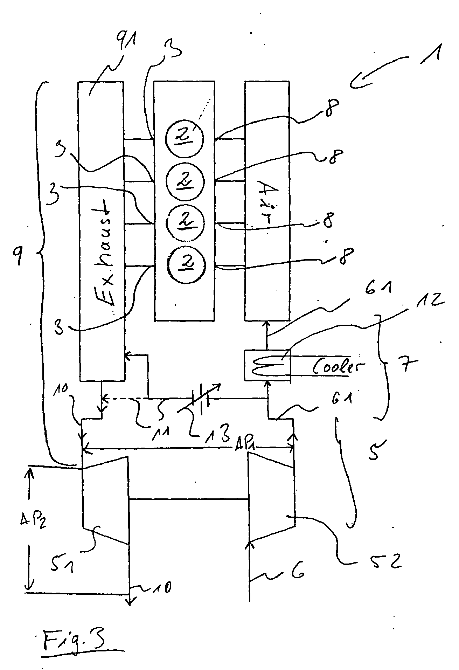

- Fig. 3: ein Funktionsschema für einen Zweitakt-Motor gemäss Fig. 2.

Fig. 1 zeigt einen aus dem Stand der Technik bekannten Viertakt-Motor 1', der in seiner Funktion oben bereits eingehend beschrieben wurde.

Fig. 2 zeigt in einer schematischen Darstellung die wesentlichen Teile eines Grossdieselmotors mit Aufladegruppe, der als Zweitakt-Grossdieselmotor mit Längsspülung ausgebildet ist und im folgenden gesamthaft mit dem Bezugszeichen 1 bezeichnet wird. Gleiche Bezugszeichen beziehen sich in allen Figuren auf dieselben korrespondierenden Merkmale.

Der Grossdieselmotor 1 umfasst üblicherweise mehrere Zylinder 2 mit einem in einem Zylinderdeckel angeordneten Auslassventil 3, in welchem Zylinder 2 ein Kolben 4 zwischen einem unteren Totpunkt UT und einem oberen Totpunkt OT entlang einer Lauffläche hin- und herbewegbar angeordnet ist. Dabei wird die obere Totpunktposition OT des Kolbens 4 wie üblich mit einem Kurbelwinkel von 0° bzw. 360°, und die untere Totpunktposition UT des Kolbens 4 mit einem Kurbelwinkel von 180° identifiziert. Der Zylinder 2 mit Zylinderdeckel und der Kolben 4 begrenzen in bekannter Weise einen Brennraum des Zylinders 2. Im unteren Bereich des Zylinders 2 sind mehrere Spülluftöffnungen 8 vorgesehen, die als Spülschlitze 8 ausgeführt sind. Je nach Stellung des Kolbens 4 werden die Spülschlitze 8 von diesem überdeckt oder freigegeben. Durch die Spülluftöffnungen 8 kann die als Spülluft 61 bezeichnete Frischluft in den Brennraum des Zylinders 2 einströmen. Durch das im Zylinderdeckel angeordnete Auslassventil 3 strömen die bei der Verbrennung entstandenen Abgase 10 durch eine Abgasleitung 9, die sich an das Auslassventil 3 anschliesst, in eine Aufladegruppe 5.

Die Aufladegruppe 5 umfasst als wesentliche Komponenten in an sich bekannter Weise einen Verdichter 52 mit Verdichterlaufrad 521 zum Verdichten von Luft 6, sowie eine Turbine 51 mit einem Turbinenlaufrad 511 zum Antreiben des Verdichterlaufrads 521, das durch eine Welle in bekannter Weise wirkfest mit dem Turbinenlaufrad 511 verbunden ist. Die Turbine 51 und der Verdichter 52 sind in einem Gehäuse angeordnet und bilden einen Turbolader 5. Die Turbine 51 wird durch die einströmenden heissen Abgase 10 aus dem Brennraum des Zylinders 2 angetrieben.

Zum Beschicken des Brennraums des Zylinders 2 mit Spülluft 61 wird durch das Verdichterlaufrad 521 über einen Ansaugstutzen Luft 6 angesaugt und im Turbolader 5 komprimiert. Aus dem Turbolader 5 gelangt die komprimierte Luft 61 durch einen nachgeschalteten Diffusor und einen Ladeluftkühler über eine Druckleitung in einen Einlassreceiver, von dem aus die komprimierte Luft schliesslich als Spülluft 61 durch die Spülschlitze 8 unter erhöhtem Druck in den Brennraum des Zylinders 2 gelangt. Der Diffusor und der Ladeluftkühler bilden gemeinsam mit der Druckleitung die Spülluftleitung 7.

Zwischen der Spülluftleitung 7 und der Abgasleitung 9 ist erfindungsgemäss eine Bypass-Leitung 11 vorgesehen, wobei die Bypass-Leitung 11 beispielsweise an der Ausgangsseite des Zylinders 2 in der Nähe des Auslassventils 3 in die Abgasleitung 9 münden kann, oder aber auch, wie die gestrichelte Linie in Fig. 2 andeutet, in das Abgas-Sammelrohr 91 münden kann, in welchem in an sich bekannter Weise die Abgase aller Zylinder 2 des Zweitakt-Motors 1 gesammelt werden und das ein verhältnismässig grosses Volumen aufweist.

Es versteht sich, dass die Darstellung der Fig. 2 nur exemplarisch und schematisch zu verstehen ist und in einem speziellen Ausführungsbeispiel die Bypass-Leitung 11 auch gleichzeitig in die Abgasleitung 9 und in das Abgas-Sammelrohr 91 münden kann und in speziellen Fällen auch mehrere Bypass-Leitungen 11 an ein und demselben Motor vorgesehen sein können.

Anhand von Fig. 3 soll im folgenden die Wirkungsweise einer erfindungsgemässen Bypass-Leitung 11 im Betriebszustand eines Zweitakt-Grossdieselmotors 1 mit Längsspülung erläutert werden.

In Fig. 3 ist in schematischer Darstellung ein Zweitakt-Motor 1 mit vier Zylindern 2 gezeigt. Es versteht sich, dass ein erfindungsgemässer Zweitakt-Motor auch weniger als 4 Zylinder, oder auch mehr als 4 Zylinder, insbesondere 5, 6, 7, 8, 9, 10, 11, 12, 13 oder 14 Zylinder, oder auch jede andere Zahl an Zylindern 2 haben kann.

Den Zylindern 2 wird über die Spülluftöffnungen 8 mit Unterstützung des Verdichters 52 verdichtete Luft 61 zugeführt. Die bei der Verbrennung im Zylinder 2 entstehenden Abgase 10 werden über die Auslassventile 3 dem Abgas-Sammelrohr 91 zugeführt, von wo aus die Abgase 10 zum Antrieb der Turbine 51 der Aufladegruppe 5 zugeführt werden.

Zwischen der Spülluftleitung 7 und der Abgasleitung 9 ist erfindungsgemäss eine Bypass-Leitung 11 vorgesehen, wobei der Luftstrom durch die Bypass-Leitung 11 mittels eines Regelventils 13 steuer- und / oder regelbar ist.

Die Bypass-Leitung 11 kann dabei gleichzeitig oder alternativ, wie dies durch die gestrichelte Linie in Fig. 3 angedeutet ist, von der Spülluftleitung 7 ausgehend direkt in das Abgas-Sammelrohr 91 münden und / oder beispielsweise zwischen dem Ausgang des Abgas-Sammelrohrs 91 und der Turbine 51 des Turboladers 5 in die Abgasleitung 9 münden.

Im Betriebszustand wird, beispielsweise in Abhängigkeit von einem Betriebsparameter des Zweitakt-Motors 1, insbesondere in Abhängigkeit von der Drehzahl und / oder der Last und oder eines anderen Betriebsparameters, eine vorgegebene Druckdifferenz zwischen der Spülluftleitung 7 und dem Auslassventil 3 und / oder zwischen der Spülluftleitung 7 und dem Abgas-Sammelrohr 91 eingestellt.

Dadurch wird zwar die Druckdifferenz ΔP₁ über den Zylindern 2 des Zweitakt-Motors 1 in Bezug auf einen gleichen Motor, der keine Bypass-Leitung 11 hat, etwas herabgesetzt, aber gleichzeitig wird die Druckdifferenz ΔP₂ über der Turbine 51 des Turboladers 5 erhöht, so dass insgesamt die Leistung des erfindungsgemässen Zweitakt-Grossdieselmotors 1, insbesondere, aber nicht nur, im Teillastbereich und / oder bei niedrigen und mittleren Drehzahlen deutlich erhöht.

## Patentansprüche

1. Zweitakt-Motor, insbesondere Zweitakt-Grossdieselmotor mit Längsspülung, umfassend einen Zylinder (2) mit einem Auslassventil (3) und einem Kolben (4), der im Zylinder (2) zwischen einem oberen Totpunkt (OT) und einem unteren Totpunkt (UT) hin- und herbewegbar angeordnet ist, sowie eine Aufladegruppe (5) mit einer Turbine (51) mit Turbinenlauffrad (511), das mit einem Verdichterrad (521) eines Verdichter (52) zum Verdichten von Luft (6), die als Spülluft (61) über einen Auslass (522) des Verdichters (52) und eine Spülluftleitung (7) dem Zylinder (2) der Hubkolbenbrennkraftmaschine durch eine Spülluftöffnung (8) zuführbar ist, drehfest gekoppelt ist, wobei der Turbine (51) zum Antreiben des Turbinenlauffrads (511) über das Auslassventil (3) und eine Abgasleitung (9) Abgase (10) aus dem Zylinder (2) zuführbar sind, **dadurch gekennzeichnet, dass** zwischen der Spülluftleitung (7) und der Abgasleitung (9) eine Bypass-Leitung (11) vorgesehen ist.

2. Zweitakt-Motor nach Anspruch 1, wobei die Abgasleitung (9) ein Abgas-Sammelrohr (91) zur Sammlung der Abgase (10) aus mehreren Zylindern (2) umfasst, und die Bypass-Leitung (11) zwischen der Spülluftleitung (7) und dem Abgass-Sammelrohr (91) vorgesehen ist.

3. Zweitakt-Motor nach Anspruch 1 oder 2, wobei die Bypass-Leitung (11) zwischen dem Auslassventil (3) und dem Abgas-Sammelrohr (91) vorgesehen ist.

4. Zweitakt-Motor nach einem der vorangehenden Ansprüche, wobei die Spülluftleitung (7) einen Ladeluftkühler (12) umfasst und die Bypass-Leitung (11) zwischen dem Verdichter (52) und dem Ladeluftkühler (12) vorgesehen ist.

5. Zweitakt-Motor nach einem der vorangehenden Ansprüche, wobei die Bypass-Leitung (11) zwischen der Spülluftöffnung (8) und dem Ladeluftkühler (12) vorgesehen ist.

6. Zweitakt-Motor nach einem der vorangehenden Ansprüche, wobei in der Bypass-Leitung (11) ein steuer- und / oder regelbares Regelventil (13) vorgesehen ist.

7. Zweitakt-Motor nach einem der vorangehenden Ansprüche, wobei eine Ansteuereinheit vorgesehen ist, so dass das Regelventil (13) in Abhängigkeit von einem Betriebsparameter des Zweitakt-Motors, insbesondere in Abhängigkeit von der Drehzahl und / oder der Last und oder eines anderen Betriebsparameters steuer- und / oder regelbar ist.

8. Verfahren zum Betreiben eines Zweitakt-Motors (1) gemäss einem der Ansprüche 1 bis 7, **dadurch gekennzeichnet, dass** über die Bypass-Leitung (11) eine vorgegebene Druckdifferenz zwischen der Spülluftleitung (7) und der Abgasleitung (9) eingestellt wird.

9. Verfahren nach Anspruch 8, wobei die Druckdifferenz in Abhängigkeit von einem Betriebsparameter des Zweitakt-Motors (1), insbesondere in Abhängigkeit von der Drehzahl und / oder der Last und oder eines anderen Betriebsparameters eingestellt wird.

10. Verfahren nach einem der Ansprüche 8 oder 9, wobei die Bypassleitung (11) zwischen der Spülluftleitung (7) und zwischen dem Auslassventil (3) und dem Abgas-Sammelrohr (91) vorgesehen wird und die Bypass-Leitung (7) gleichzeitig zwischen der Spülluftleitung (7) und dem Abgas-Sammelrohr (91) vorgesehen wird, in Abhängigkeit von einem Betriebsparameter des Zweitakt-Motors (1), insbesondere in Abhängigkeit von der Drehzahl und / oder der Last und oder eines anderen Betriebsparameters, eine vorgegebene Druckdifferenz zwischen der Spülluftleitung (7) und dem Auslassventil (3) und / oder zwischen der Spülluftleitung (7) und dem Abgas-Sammelrohr (91) eingestellt wird.
